(19) Europäisches Patentamt
European Patent Office
Office européen des brevets

(11) Veröffentlichungsnummer: **0 070 919**
**B1**

(12) # EUROPÄISCHE PATENTSCHRIFT

(45) Veröffentlichungstag der Patentschrift:
24.10.84

(51) Int. Cl.³: **C 01 B 5/02**

(21) Anmeldenummer: **81106732.1**

(22) Anmeldetag: **28.08.81**

(54) Verfahren zur Herstellung von mit Deuterium angereichertem Wasser bei der Gewinnung von Wasserstoff.

(30) Priorität: **30.07.81 CH 4929/81**

(43) Veröffentlichungstag der Anmeldung:
**09.02.83 Patentblatt 83/6**

(45) Bekanntmachung des Hinweises auf die Patenterteilung:
**24.10.84 Patentblatt 84/43**

(84) Benannte Vertragsstaaten:
**AT DE FR GB IT**

(56) Entgegenhaltungen:
**CH - A - 616 602**

(73) Patentinhaber: **GEBRÜDER SULZER AKTIENGESELLSCHAFT, Zürcherstrasse 9, CH-8401 Winterthur (CH)**

(72) Erfinder: **Mandrin, Charles, Dr., Im Laubegg 7, CH-8406 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## Beschreibung

Die Erfindung betrifft ein Verfahren zur Herstellung von mit Deuterium angereichertem Wasser bei der Gewinnung von Wasserstoff gemäss dem Oberbegriff des Patentanspruches 1.

Ein solches Verfahren ist in der europäischen Patentanmeldung Nr. 47357 beschrieben.

Es besteht darin, dass in einer Synthesegasanlage Wasserstoff gewonnen wird und mit diesem Prozess ein Verfahren zur Erzeugung von mit Deuterium angereichertem Wasser als Ausgangsprodukt für eine Schwerwassergewinnungsanlage verbunden ist.

Die Synthesegasanlage wird in mehreren, zeitlich aufeinanderfolgenden Betriebsperioden derart betrieben, dass während der ersten Betriebsperiode Frischwasser im Überschuss in die Synthesegasanlage eingeleitet wird, und dass das aus dem gewonnenen Gemisch in einem Kondensator abgetrennte Abwasser in einen Speicherbehälter eingeleitet wird. Während der darauffolgenden Betriebsperioden wird als Speisewasser für die Synthesegasanlage in dem Behälter gespeichertes Abwasser verwendet und das jeweils gewonnene Abwasser in dem Behälter entsprechend seiner Deuteriumkonzentration geschichtet gespeichert. Das während der letzten Betriebsperiode gewonnene Abwasser mit der höchsten Deuteriumkonzentration wird in einen zweiten Behälter eingeleitet und aus ihm einer Anlage zur Gewinnung von schwerem Wasser zugeführt.

Aus der CH-PS Nr. 616602 ist das nachstehende Verfahren zur Herstellung von mit Deuterium angereichertem Wasser bei der Gewinnung von Wasserstoff bekannt.

Das mit Deuterium angereicherte Wasser soll als Ausgangsprodukt für eine Anlage zur Gewinnung von schwerem Wasser in Kombination mit einer Anlage zur katalytischen Erzeugung von Wasserstoff dienen. In einer Synthesegasanlage wird Methan unter Anwesenheit von mit Deuterium angereichertem Wasserdampf in Wasserstoff, Stickstoff und Kohlendioxid aufgespalten. Aus dem Gasgemisch wird in einem Kondensator mit Deuterium angereichertes Wasser ausgeschieden. Eine Teilmenge des angereicherten Wassers dient dazu, in einer Austauschkolonne Wasserdampf mit Deuterium anzureichern.

Das restliche Gasgemisch wird in mindestens eine Austauschstufe, bestehend aus einer katalytischen Trennstufe für den Isotopenaustausch zwischen Wasserstoff und Wasserdampf und aus einer Austauschkolonne für den Isotopenaustausch zwischen Wasserdampf und einem einer zusätzlichen Wasserquelle entnommenen Wasserstrom eingeleitet. Das hierbei mit Deuterium angereicherte Wasser wird ebenfalls dazu verwendet, den in die Anlage eingeleiteten Wasserdampf mit Deuterium anzureichern, während das aus der Austauschstufe entnommene, aus Wasserstoff und Stickstoff bestehende Gemisch einer Ammoniaksyntheseanlage zugeführt wird.

Die Grenze für die erreichbare Deuteriumkonzentration des als Speisestrom einer Schwerwasseranlage dienenden angereicherten Wassers ist hierbei durch die Massenstromverhältnisse und Trennfaktoren des Wasserstofferzeugungsprozesses bestimmt. Sie kann nicht zum Zwecke einer wirtschaftlicheren Schwerwassererzeugung verschoben werden. Dieses trifft insbesondere für die Mengenverhältnisse der in die Synthesegasanlage eingespeisten Brennstoff- und Wasserdampfströme und des entnommenen, aus Wasserstoff, Wasserdampf und Restkomponenten bestehenden Gemisches und des auskondensierten Abwassers zu. Ausserdem sind die in der Synthesegasanlage herrschenden Temperaturen für den Deuteriumtrennfaktor zwischen Wasserstoff und Wasser massgebend.

Wie das in der CH-PS Nr. 616602 angegebene Zahlenbeispiel zeigt, kann für das Speisewasser der Schwerwasseranlage eine Deuteriumkonzentration von 333 ppm (D/D+H) bei einem Durchsatz von 1000 kmol/h erreicht werden.

Unter der Annahme, dass die Ausbeute des Speisewassers in der Schwerwasseranlage 0,75 ist, ergibt sich eine Schwerwasserproduktion von 4,995 kg/h Schwerwasser und ein a-Faktor von $2{,}775 \cdot 10^{-4}$ kg $D_2O/H_2O$. Der Wirtschaftlichkeitsfaktor a ist als das Verhältnis der spezifischen Schwerwasserproduktion zum Speisewasser definiert.

Ein Speisewasserdurchsatz von 1 kmol/h mit natürlicher Deuteriumkonzentration von 146 ppm (D/D+H), beispielsweise Flusswasser, ergibt einen a-Faktor von $1{,}217 \cdot 10^{-4}$ kg $D_2O/H_2O$. Bekanntlich ist der a-Faktor umgekehrt proportional zur Grösse der Schwerwasseranlage und zu ihrem Energieverbrauch.

Es ist ein Ziel der Erfindung, gegenüber dem bekannten Verfahren einen höheren a-Faktor zu erreichen.

Gemäss dem in der zitierten schweizerischen Patentschrift angegebenen Zahlenbeispiel wäre die theoretische Schwerwasserproduktion, die sich aufgrund der äquivalenten Schwerwasserdurchsatzmengen, die in den Speiseströmen zur Verfügung stehen, 28,23 kg/h $D_2O$. Tatsächlich ist aber die Produktion, wie vorstehend angegeben wurde, nur 4,995 kg/h $D_2O$ und die Ausbeute liegt daher bei 17,7%.

Bei dem eingangs erwähnten, in der europäischen Patentanmeldung Nr. 47357 beschriebenen Verfahren besteht eine wirtschaftliche Begrenzung darin, dass die Ausbeute der zur Verfügung stehenden Deuteriumquellen relativ tief liegt. Anders ausgedrückt, bedeutet dieses, dass für eine gegebene Grösse der Synthesegasanlage nur relativ wenig Schwerwasser gewonnen werden kann. Das auf der Seite 14 der vorstehend genannten europäischen Patentanmeldung angegebene Zahlenbeispiel führt nach drei Betriebsperioden zu einer Produktion von 2,129 kg/h $D_2O$. Wie man sieht, ist diese Ausbeute für vergleichbare Verhältnisse bei einem Prozess gemäss der CH-PS Nr. 616602, bei der die Produktion 4,995 kg/h $D_2O$ beträgt, kleiner. Die entsprechende Ausbeute ist nur 10%.

Der a-Faktor beträgt nur $2{,}42 \cdot 10^{-4}$ kg $D_2O/$

$H_2O$. Jedoch könnte der a-Faktor bei einer grösseren Anzahl von Betriebsperioden erhöht werden. Allerdings würde dann die Ausbeute noch mehr sinken. Die relativ schlechte Ausbeute ergibt sich deswegen, weil das Ammoniaksynthesegas ($N_2$ + $3H_2$), das die Anlage verlässt, noch eine ziemlich hohe Deuteriumkonzentration aufweist und zwar hauptsächlich während der letzten Betriebsperiode, und weil keinerlei Einrichtungen vorgesehen sind, um dieses Deuterium für die Schwerwasseranlage zurückzugewinnen.

Der Erfindung liegt die Aufgabe zugrunde, eine bessere Ausbeute zu erreichen, als dieses mit einem Verfahren gemäss der europäischen Patentanmeldung Nr. 47357 möglich ist und gleichzeitig einen höheren a-Faktor zu erzielen als bei einem Verfahren, wie es aus der CH-PS Nr. 616602 bekannt ist.

Diese Aufgabe wird mit Hilfe der in Anspruch 1 angegebenen Massnahmen gelöst.

Bei einer Ausführungsform der Erfindung wird mindestens in einer der Austauschstufen Wasserstoff mit Wasserdampf in Isotopenaustausch gebracht, wobei sich der Wasserdampf an Deuterium anreichert, und sodann der Wasserdampf in Gegenstrom zu dem Zusatzwasser in Isotopenaustausch gebracht, wobei sich der Wasserdampf an Deuterium abreichert und das Zusatzwasser sich an Deuterium anreichert.

Bei einer weiteren Ausführungsform der Erfindung wird das Gasgemisch in Gegenstrom zu dem Zusatzwasser, in welchem Natriumhydroxid oder Kaliumhydroxid gelöst ist, in Isotopenaustausch gebracht, wobei sich das Gasgemisch an Deuterium abreichert und das Zusatzwasser sich an Deuterium anreichert.

Bei einer vorteilhaften Ausführungsform des Verfahrens nach Anspruch 5 wird das mit Deuterium angereicherte Wasser in einem dritten Behälter gespeichert, wobei während jeder der (n − 1) Betriebsperioden nacheinander das Abwasser und das mit Deuterium angereicherte Wasser der Synthesegasanlage zugeführt wird.

Hierbei ist es ohne Belang, ob während dieser Betriebsperioden zuerst das Abwasser und dann das mit Deuterium angereicherte Wasser der Synthesegasanlage zugeführt wird oder umgekehrt. Die Erfindung wird im folgenden anhand von zwei Ausführungsbeispielen erläutert.

Fig. 1 zeigt ein Flussschema einer thermischen Synthesegasanlage zur Gewinnung von Wasserstoff, die mit einem System zur Gewinnung von mit Deuterium angereichertem Wasser gekoppelt ist,

Fig. 2 zeigt ein Flussschema für eine gegenüber Fig. 1 abgewandelte Ausführungsform, und in

Fig. 3 ist ein Flussschema für eine weitere gegenüber Fig. 1 und 2 abgewandelte Ausführungsform dargestellt.

In allen Ausführungsbeispielen soll ein aus Wasserstoff und Stickstoff bestehendes Synthesegasgemisch erzeugt werden, welches zur Gewinnung von Ammoniak in einer nicht dargestellten Synthesegasanlage dient.

Die Erfindung ist nicht darauf beschränkt, dass Wasserstoff zur Gewinnung von Ammoniak erzeugt wird, sondern umfasst beispielsweise auch solche Verfahren, bei welchen Wasserstoff zur Methanolgewinnung erzeugt wird.

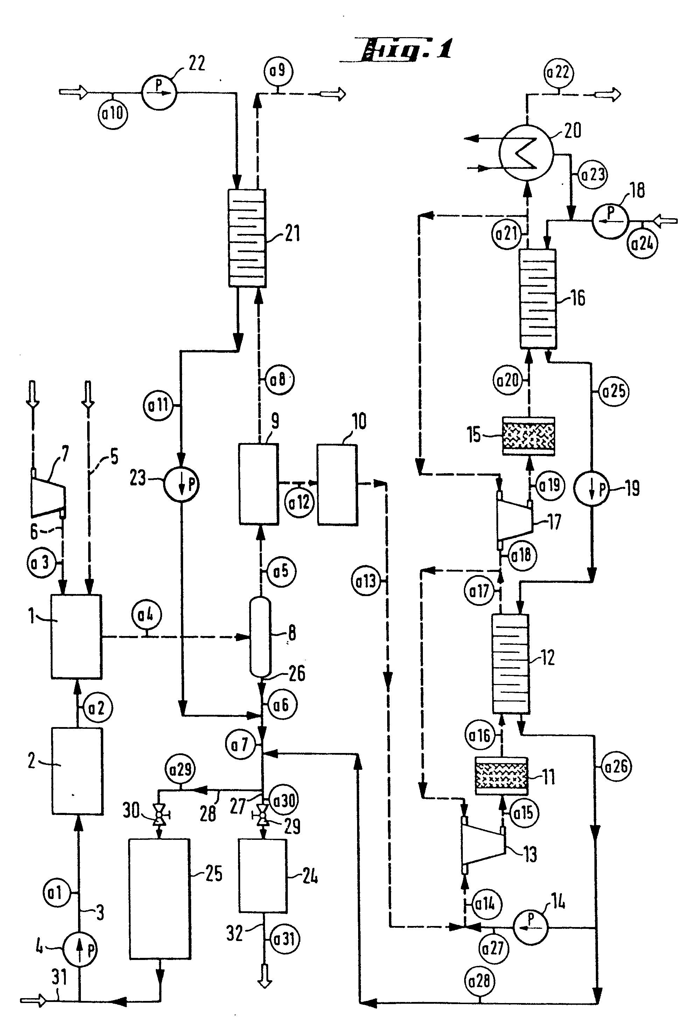

In Fig. 1 handelt es sich bei der katalytischen Synthesegasanlage 1 zur Erzeugung von Wasserstoff bzw. Wasserstoff und Stickstoff um eine in der Praxis übliche und bekannte Ausführungsform, die deshalb nur schematisch dargestellt ist. Sie besteht im wesentlichen aus einem Primärreformer, in welchem ein Katalysator, z.B. Nickeloxid, enthalten ist, welchem erhitzter Hochdruckwasserdampf und Kohlenwasserstoff, z.B. Methan, zugeführt werden, einem sogenannten Sekundärreformer, in welchen Luft eingespeist wird, und einem Konverter, in welchem eine chemische Reaktion stattfindet, die durch die Bezeichnung $CO + H_2O \rightarrow CO_2 + H_2$ wiedergegeben wird (vgl. deutsche Patentanschrift Nr. 2211105).

Im Ausführungsbeispiel wird in einem Dampferzeuger 2, dem durch eine Leitung 3 mittels einer Pumpe 4 Frischwasser während der ersten Betriebsperiode und in den folgenden (n − 1) Betriebsperioden aus einem Speicherbehälter 25 angereichertes Abwasser zugeführt wird, Hochdruckwasserdampf von beispielsweise ca. 40 bar erzeugt. Dieser Hochdruckwasserdampf wird in den Primärreformer der Synthesegasanlage 1 eingespeist. Ausserdem wird durch eine Leitung 6 ein Kohlenwasserstoff, z.B. Methan, das in einem Kompressor 7 auf den Betriebsdruck der Anlage 1 gebracht worden ist, sowie durch eine Leitung 5 Luft eingeleitet.

Das die Anlage 1 verlassende Gemisch besteht im wesentlichen aus Wasserstoff, Wasserdampf, Kohlendioxid und Stickstoff, wobei aus dem Gemisch in einem Kondensator 8 mit Deuterium angereichertes Wasser abgeschieden wird.

Das im wesentlichen Wasserstoff, Stickstoff, Kohlendioxid und noch Wasserdampfspuren enthaltende Gemisch wird in eine Kohlendioxidabtrenneinrichtung 9 bekannter Bauart (vgl. z.B. „Chemical Engineering Progress" [vol. 70/Nr. 2], Februar 1974, S. 57, Fig. 4) eingespeist.

Anschliessend wird das Gemisch in einen Methanator 10 üblicher Bauart eingespeist, in welchem chemische Reaktionen, die durch die Bezeichnungen $CO + 3H_2 \rightarrow CH_4 + H_2O$ und $CO_2 + 4H_2 \rightarrow CH_4 + 2H_2O$ wiedergegeben werden, stattfinden. Das im wesentlichen aus Wasserstoff, Wasserdampf und Methanspuren bestehende Gemisch, in welchem der Wasserstoff und der Wasserdampf über die natürliche Deuteriumkonzentration hinaus mit Deuterium angereichert sind, wird in eine erste Austauschstufe eingeleitet. Diese Austauschstufe besteht im wesentlichen aus einer Trennstufe 11, die einen beispielsweise aus Platin oder Nickel bestehenden Katalysator aufweist, und einer Austauschkolonne 12.

In der Trennstufe 11 findet ein Isotopenaustausch zwischen Wasserstoff und Wasserdampf statt, wobei sich der Wasserdampf an Deuterium anreichert und der Wasserstoff an Deuterium verarmt. Der in die Trennstufe 11 mittels eines Kompressors 13 geförderte Gas- bzw. Dampfstrom besteht einerseits aus dem den Methanator 10 verlassenden Gemischstrom, dem eine Teilmenge des der Austauschkolonne 12 entnommenen, mit Deuterium angereicherten Wasserstromes mittels einer Pumpe 14 zugeführt wird, wobei aufgrund der latenten Wärme des Gemischstromes der Wasserstrom verdampft. Je nach Bemessung des Gesamtprozesses kann es auch erforderlich sein, zusätzlich den Gemischstrom nachzukühlen oder auch mit einer fremden Wärmequelle zu erwärmen. Ausserdem wird eine Teilmenge des die Austauschkolonne 12 verlassenden Gas- bzw. Dampfgemisches ebenfalls mit Hilfe des Kompressors 13 in die Trennstufe 11 eingeleitet. Diese Rezirkulation wird deshalb vorgenommen, um eine genügend grosse Menge von Wasserdampf in der Trennstufe mit dem Wasserstoff in Kontakt zu bringen und dadurch eine möglichst grosse Deuteriumanreicherung des Wasserdampfes zu erreichen.

Bei gebräuchlichen Katalysatoren, wie z.B. Platin oder Nickel, ist es erforderlich, das in die Trennstufe eintretende Gemisch so weit zu erwärmen, dass der Wasserdampf überhitzt ist, um zu vermeiden, dass durch Wassertröpfchen der Katalysator angegriffen und inaktiv wird.

Zur Erwärmung des Gemisches kann beispielsweise die Kompressionswärme des Kompressors 13 ausgenutzt werden. Sollte diese Wärme nicht ausreichen, wird eine fremde Heizquelle zur erforderlichen Erwärmung des Gemisches angeordnet.

In der Austauschkolonne 12 findet ein Isotopenaustausch zwischen dem Wasserdampf des die Trennstufe 11 verlassenden Gemisches und im Gegenstrom dazu geführten, aus einer zusätzlichen Wasserquelle stammenden Wassers statt, wobei sich das Wasser mit Deuterium anreichert und der Wasserdampf an Deuterium verarmt. Der Wasserstoff des Gemisches nimmt in dieser Austauschkolonne an dem Isotopenaustausch nicht teil.

Im Ausführungsbeispiel ist eine zweite, aus einer Trennstufe 15 und einer Austauschkolonne 16 bestehende Austauschstufe in Serie zu der ersten Austauschstufe im System angeordnet.

Diese Austauschstufe weist ebenfalls einen Kompressor 17 zur Förderung des Gemisches in die Trennstufe 15 auf.

Die Austauschvorgänge in der Trennstufe 15 und in der Austauschkolonne 16 verlaufen in der gleichen Weise wie in der ersten Austauschstufe.

Gegebenenfalls kann es je nach Prozessführung vorteilhaft sein, eine grössere Anzahl solcher Austauschstufen in Serie im System anzuordnen.

Im Ausführungsbeispiel wird aus einer zusätzlichen, nicht dargestellten Wasserquelle Wasser mit natürlicher Deuteriumkonzentration, nachdem es in der Pumpe 18 auf den durch die Synthesegasanlage vorgegebenen Prozessdruck gebracht worden ist, in die Austauschkolonne 16 eingeleitet und dort an Deuterium angereichert und sodann mittels einer Pumpe 19 in die Austauschkolonne 12 der ersten Austauschstufe gefördert. Nachdem aus dem die Kolonne 16 verlassenden Gemisch, das im Ausführungsbeispiel aus an Deuterium verarmtem Wasserstoff, Stickstoff, Wasserdampf und Methanspuren besteht, in einem Kondensator 20 der ebenfalls an Deuterium verarmte Wasserdampf verflüssigt und in die Austauschkolonne 16 zurückgeführt worden ist, wird das Synthesegasgemisch in eine nicht dargestellte Ammoniaksyntheseanlage eingeleitet.

Ausserdem wird aus einer weiteren zusätzlichen Wasserquelle stammendes Wasser, nachdem es in einer Austauschkolonne 21 durch Isotopenaustausch mit aus der Kohlendioxidabtrenneinrichtung entnommen, mit Deuterium angereichertem Wasserdampf in Isotopenaustausch gebracht worden ist und sich hierbei mit Deuterium angereichert hat, dem aus dem Kondensator 8 entnommenen Abwasser zugemischt.

In der Förderleitung des Wasserstromes der zusätzlichen Wasserquelle sind Pumpen 22 und 23 angeordnet, die dazu dienen, das Wasser auf den in der Austauschkolonne 21 herrschenden, durch die Synthesegasanlage 1 vorgegebenen Prozessdruck zu bringen und ausserdem die Druckverluste in den Leitungen zu kompensieren.

Aus der Austauschkolonne 21 wird der Wasserdampf, nach seiner Abreicherung an Deuterium, zusammen mit dem Kohlendioxid aus der Anlage weggeführt.

Ebenfalls wird das in den Austauschstufen 16 und 12 mit Deuterium angereicherte Wasser dem aus dem Kondensator 8 entnommenen Abwasser zugemischt.

Die an den Kondensator 8 angeschlossene Entnahmeleitung 26 für Abwasser und die beiden, vorstehend beschriebenen Teilströme, die aus Zusatzwasserquellen stammen und mit Deuterium angereichert sind, verzweigt sich in zwei an die Behälter 24 und 25 angeschlossene Leitungen 27 und 28, in welchen Abschlussorgane 29 und 30 angeordnet sind.

Die in das Flussschema eingetragenen Stellen al bis a28 entsprechen den gleichbezeichneten Stellen im Ausführungsbeispiel der CH-PS Nr. 616602, worin in einem Zahlenbeispiel die Temperaturen, Drucke, Durchsatzmengen, Deuteriumkonzentrationen und Trennfaktoren angegeben sind.

Im vorliegenden Fall sind mit a29 bis a31 Stellen im Speicherungsprozess des angereicherten Wassers bezeichnet. Die Betriebsweise der Anlage wird im folgenden anhand des Flussschemas erläutert.

Die Betriebszeit wird in n Zeitperioden unterteilt.

Zu Beginn der ersten Betriebsperiode ist der Speicher 25 leer und der Speicher 24 gefüllt. Es sei hierbei darauf hingewiesen, dass der Speicher 24 so gross dimensioniert ist, dass sein Inhalt ausreicht, eine kontinuierliche Speisung der nicht dargestellten Schwerwasseranlage zu gewährleisten.

Zweckmässig wird der Speicher 24 zunächst während einer Betriebszeit der Gesamtanlage von n Perioden, während der die Schwerwasseranlage noch ausser Betrieb gesetzt ist, gefüllt.

Während der ersten Periode wird Flusswasser mit 146 ppm/D/D + H an der Stelle 31 eingespeist und das mit Deuterium angereicherte Wasser, das an den Stellen a7 und a28 vorhanden ist, wird bei geöffnetem Ventil 30 in den Speicher 25 eingeleitet. Das Ventil 29 in der Zufuhrleitung 27 zum Speicher 24 ist während dieser Zeit geschlossen und aus dem Speicher 24 wird über eine Leitung 32 angereichertes Wasser für die Schwerwasseranlage entnommen.

Während der nächsten (n − 2) Perioden wird das für die Synthesegasanlage benötigte Wasser aus dem Speicher 25 entnommen, wobei das an den Stellen a7 und a28 vorhandene, angereicherte Wasser nach wie vor in den Speicher 25 eingeleitet wird.

Der Speicherbehälter 25 muss so ausgebildet sein, dass das in der Synthesegasanlage 1 erzeugte und im Kondensator 8 abgetrennte, mit Deuterium angereicherte Abwasser geschichtet gespeichert werden kann, so dass keine Durchmischung des während der einzelnen Betriebsperioden gespeicherten Abwassers eintreten kann.

Dieses kann beispielsweise durch geeignete Abmessungen, wie grosse Länge und kleiner Durchmesser, oder mit Hilfe von schikanenartigen Einbauten erreicht werden oder mit Hilfe von anderen Massnahmen, wie sie aus dem Gebiet der Warmwasser- oder Kältespeicherungstechnik bekannt sind.

Während der Perioden 1 bis n − 1 ist der Durchsatz an der Stelle a29 gleich der Summe der Durchsätze an den Stellen a7 und a28.

Während der letzten Perioden wird das Restwasser aus dem Speicher 25 für die Wasserstofferzeugung in der Anlage 1 verwendet und das angereicherte Wasser bei geöffnetem Ventil 29 (Ventil 30 wird geschlossen) in den Speicher 24 eingeleitet. Am Ende der Periode n ist der Speicher 25 leer und der Speicher 24 gefüllt.

Der Durchsatz an angereichertem Wasser ist an der Stelle a31 während aller Perioden konstant. Er wird bestimmt durch die Beziehung:

$$\text{Durchsatz (a31)} = \text{Durchsatz (a30)} \; \frac{\text{Dauer der Periode n}}{\text{Gesamtdauer aller Perioden 1 bis n}}$$

Im folgenden wird ein Zahlenbeispiel für einen Prozess angegeben, wie er in einer Anlage mit 10 Betriebsperioden durchgeführt werden kann.

| Betriebs-periode | Betriebs-stunden | Inhalt des Speicher-behälters 25* (m³) | Deuterium-konzen-tration am Punkt a29 ppm D/D + H |
|---|---|---|---|
| I | 484 | 48 622 | 197 |
| II | 536 | 53 846 | 238 |
| III | 594 | 59 630 | 272 |
| IV | 658 | 66 037 | 298 |
| V | 728 | 73 132 | 321 |
| VI | 806 | 80 989 | 339 |
| VII | 893 | 89 691 | 353 |
| VIII | 990 | 99 327 | 365 |
| IX | 1096 | 109 999 | 374 |
| X | 1215 | 0 | 382 |
| Total | 8000 | | |

* Am Ende der betreffenden Periode.

Die angenommene Ausbeute des Speisewassers in der Schwerwasseranlage ist 0,75.

Jährliche Schwerwasserproduktion
(8000 h)                    38 795,77 kg/Jahr
Im Vergleich dazu:

europäische Anmeldung
Nr. 47357                   17 034 kg/Jahr
CH-PS Nr. 616602            39 960 kg/Jahr

a-Faktor                $3{,}18 \cdot 10^{-4} \frac{\text{kg } D_2O}{\text{kg } H_2O}$

Im Vergleich dazu:
europäische Anmeldung

Nr. 47357               $2{,}42 \cdot 10^{-4} \frac{\text{kg } D_2O}{\text{kg } H_2O}$

CH-PS Nr. 616602        $2{,}775 \cdot 10^{-4} \frac{\text{kg } D_2O}{\text{kg } H_2O}$

Die Gesamtausbeute im vorliegenden Zahlenbeispiel beträgt 17%, in der europäischen Anmeldung Nr. 47357 10% und in der CH-PS Nr. 616602 17%.

Das vorliegende Zahlenbeispiel zeigt, dass das erfindungsgemässe Verfahren bei einem Betrieb mit 10 Perioden ein Verfahren gemäss der europäischen Patentanmeldung Nr. 47357 übertrifft, indem der a-Faktor und die jährliche Produktion sowie die jährliche Gesamtdeuteriumausbeute grösser sind. Ebenfalls wird ein Verfahren gemäss der CH-PS Nr. 616602 bezüglich a-Faktor übertroffen mit der gleichen Deuteriumausbeute und einer etwas tieferen Deuteriumproduktion. Im folgenden werden in einer Zusammenfassung Zahlenbeispiele für 20 Fälle angegeben und zwar die erzielte Leistung in Abhängigkeit von der Anzahl der Perioden.

In allen Fällen beträgt die gesamte Betriebszeit ein Jahr, d.h. 8000 h.

Im ersten Fall wird die gesamte Betriebszeit von einer einzigen Betriebsperiode ausgefüllt, analog zu Fig. 1. Im zweiten Fall besteht die Betriebszeit aus zwei Betriebsperioden, wobei die Daten für die zweite Betriebsperiode angegeben sind, im dritten Fall aus drei Betriebsperioden, wobei die Daten für die dritte Betriebsperiode angegeben sind usw.

*Zahlenbeispiel*

| Betriebsperiode | Dauer der letzten Betriebsperiode (h) | Durchsatz am Eintritt der $D_2O$-Anlage | Deuteriumkonz. am Eintritt der $D_2O$-Anlage (ppm) | Schwerwasserproduktion (kg/Jahr) | $a \cdot 10^{-4}$ $\dfrac{kg\ D_2O}{kg\ H_2O}$ |
|---|---|---|---|---|---|
| I | 8000 | 100 458 | 197 | 131 957 | 1,642 |
| II | 4204 | 52 794 | 238 | 83 890 | 1,986 |
| III | 2943 | 36 954 | 272 | 66 975 | 2,265 |
| IV | 2316 | 29 088 | 298 | 57 957 | 2,491 |
| V | 1942 | 24 390 | 321 | 52 174 | 2,674 |
| VI | 1695 | 21 294 | 339 | 48 061 | 2,822 |
| VII | 1521 | 19 098 | 353 | 44 944 | 2,942 |
| VIII | 1391 | 17 478 | 365 | 42 477 | 3,039 |
| IX | 1292 | 16 218 | 374 | 40 468 | 3,117 |
| X | 1214 | 15 246 | 382 | 38 796 | 3,181 |
| XI | 1151 | 14 454 | 388 | 37 382 | 3,232 |
| XII | 1099 | 13 806 | 393 | 36 173 | 3,274 |
| XIII | 1057 | 13 284 | 397 | 35 129 | 3,308 |
| XIV | 1021 | 12 824 | 400 | 34 222 | 3,335 |
| XV | 991 | 12 444 | 403 | 33 428 | 3,357 |
| XVI | 965 | 12 119 | 405 | 32 731 | 3,375 |
| XVII | 943 | 11 841 | 407 | 32 116 | 3,390 |
| XVIII | 924 | 11 600 | 408 | 31 572 | 3,402 |
| XIX | 907 | 11 391 | 409 | 31 090 | 3,412 |
| XX | 893 | 11 208 | 410 | 30 661 | 3,419 |

Was die Anzahl und Dauer der Betriebsperioden anbelangt, sei auf folgenden Sachverhalt hingewiesen:

In allen genannten Zahlenbeispielen wurde angenommen, dass n Perioden gesamthaft 1 Jahr (8000 h) dauern. In diesem Fall sind relativ grosse Volumen der Speicher 24 und 25 erforderlich, hauptsächlich, wenn die gesamte Betriebsdauer eine grosse Anzahl von Perioden aufweist.

Nun ist es von wirtschaftlichem Interesse, die Speichervolumen möglichst klein und die einzelnen Perioden möglichst kurz zu halten. Der Grund hierfür liegt darin, dass in den Speichern 24 und 25 mit Algenwuchs zu rechnen ist.

Es ist zwar möglich, Algen mit Hilfe einer Chlorierung zu vernichten. Jedoch muss das Chlor in Ionenaustauschern vollständig vor einer Wassereinspeisung in die Synthesegasanlage oder in die Schwerwasseranlage eliminiert werden.

Bei kurzem Aufenthalt des Wassers in den Speichern, beispielsweise von 1 d, ist zu erwarten, dass der Algenwuchs mit einer leichten Chlorierung oder sogar ohne jegliche Behandlung vermieden werden kann.

Sind nur Spuren von Algen vorhanden, werden diese mit Sicherheit sowohl in dem Reformerofen (Betriebstemperatur ca. 1000°C) als auch in der Schwerwasseranlage (Betriebstemperatur ca. 210°C) vernichtet.

Die kürzeste mögliche Dauer einer Betriebsperiode ist durch die Durchlaufzeit des Wassers durch die Synthesegasanlage vorgegeben. Diese Zeit beträgt bei üblichen derartigen Anlagen einige Stunden bis zu 1 d.

Nun ist mit Hilfe der erfindungsgemässen Massnahme erreichbar, dass eine günstige durchschnittliche Dauer einer Betriebsperiode ca. 24 h beträgt.

Dieses ist durch entsprechende Steuerung der Frischwasserzugabe der zusätzlichen Wasserquellen, insbesondere an der Stelle a24 möglich.

Bei einem in einer Anlage gemäss der Fig. 1 durchgeführten Verfahren wird das angereicherte Wasser von den Stellen a7 und a28 gemischt und in dem Speicher 24 bzw. 25 gesammelt.

Die Deuteriumkonzentrationen an den Stellen a7 und a28 sind nicht gleich. Meistens ist die Deuteriumkonzentration an der Stelle a7 grösser als an der Stelle a28, wie es aus dem nachstehenden Zahlenbeispiel hervorgeht.

Die Mischung von zwei Wasserströmen mit verschiedenen Isotopenkonzentrationen hat eine Vernichtung von vorhandener Trennarbeit zur Folge.

Vermeidet man eine solche Mischung, ist eine Verbesserung der Leistung der Schwerwasseranlage zu erwarten, d.h. der a-Faktor sollte steigen.

*Zahlenbeispiel für die Deuteriumkonzentrationen an den Stellen a7 und a28 entsprechend dem Zahlenbeispiel der vorhergehenden Tabelle*

| Betriebs- periode | Deuterium- konzent. an der Stelle a7 (ppm) | Deuterium- konzent. an der Stelle a28 (ppm) |
|---|---|---|
| I | 196 | 198 |
| II | 244 | 232 |
| III | 282 | 259 |
| IV | 314 | 281 |
| V | 339 | 299 |
| VI | 359 | 313 |
| VII | 376 | 325 |
| VIII | 389 | 335 |
| IX | 400 | 342 |
| X | 409 | 348 |
| XI | 416 | 353 |
| XII | 422 | 358 |
| XIII | 427 | 361 |
| XIV | 430 | 364 |
| XV | 434 | 366 |
| XVI | 436 | 367 |
| XVII | 438 | 369 |
| XVIII | 440 | 370 |
| XIX | 441 | 371 |
| XX | 442 | 372 |

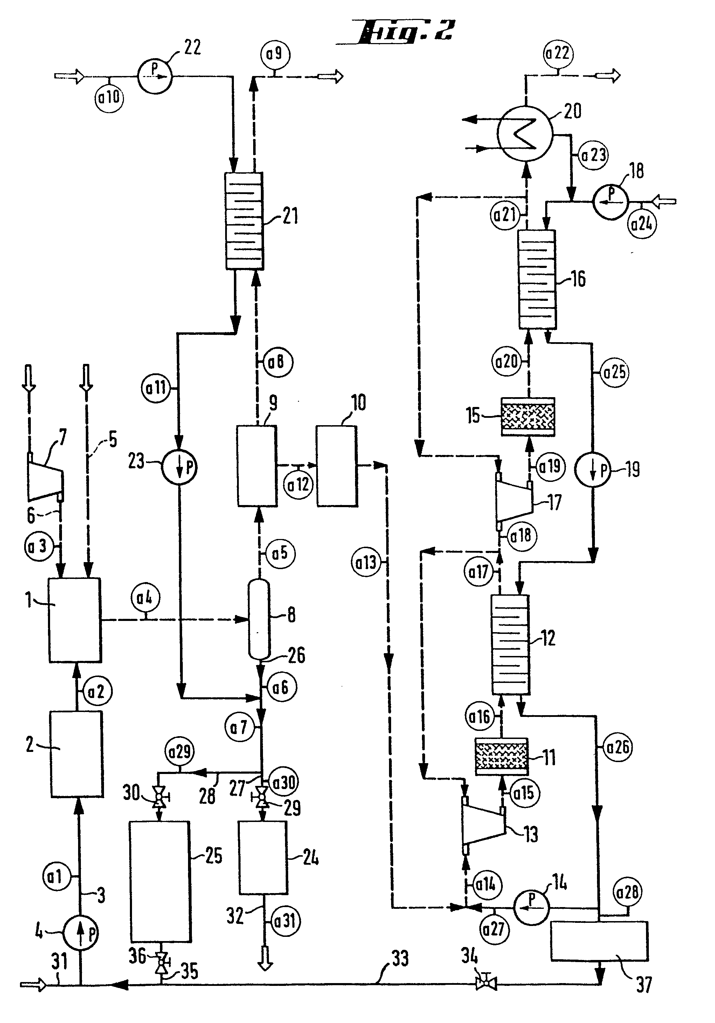

Die Fig. 2 zeigt ein Flussschema einer Anlage für eine verbesserte Ausführungsform, bei welcher die vorstehenden Überlegungen berücksichtigt sind.

Die mit Fig. 1 übereinstimmenden Anlagenelemente sind mit den gleichen Bezugsziffern bezeichnet.

Abweichend von Fig. 1 ist ein dritter Speicher 37 vorgesehen, dessen Entnahmeleitung 33, in der ein Abschlussorgan 34 angeordnet ist, an die Speiseleitung 3 der Synthesegasanlage 1 angeschlossen ist. An Leitung 33 ist die Entnahmeleitung 35 des Speichers 25 angeschlossen, wobei in Leitung 35 ein Absperrorgan 36 angeordnet ist.

Die Speisung mit Flusswasser an der Stelle 31 wird hierbei nur während der ersten Periode der ersten Inbetriebsetzung benutzt, da am Anfang dieser Periode alle drei Speicher leer sind.

Während der ersten Periode wird angereichertes Wasser in die Speicher 25 und 37 eingespeist, während bei der ersten Inbetriebsetzung der Speicher 24 leer bleibt.

Bei jeder der n − 2 folgenden Perioden der ersten Inbetriebsetzung (Perioden 2 bis n − 1) wird zuerst angereichertes Wasser aus dem Speicher 25 und dann angereichertes Wasser aus dem Speicher 37 oder in umgekehrter Reihenfolge in die Synthesegasanlage 1 eingespeist, wobei abwechselnd Ventil 34 geschlossen und Ventil 36 geöffnet, bzw. Ventil 34 und Ventil 36 geschlossen werden.

Gleichzeitig wird analog zu Fig. 1 in dem Speicher 25 angereichertes Wasser von der Stelle a7 gesammelt und abweichend von Fig. 1 angereichertes Wasser von der Stelle a28 in den Speicher 37 eingespeist.

Während der letzten Periode wird Speicher 25 entleert und Speicher 24 und 37 gefüllt.

Für den nächsten Durchgang mit n Perioden steht nun der Inhalt des Speichers 37 als Speisewasser für die Wasserstofferzeugungsanlage 1 während der Periode 1 zur Verfügung. Dieses Wasser ist verhältnismässig reich an Deuterium. Somit werden schon während der ersten Periode relativ hohe Deuteriumkonzentrationen erreicht.

Nach mehreren Durchgängen von jeweils n Perioden stellt sich in der Anlage eine Art Gleichgewicht ein.

Dieses ist so zu verstehen, dass die Deuteriumkonzentrationen nur innerhalb eines Durchganges steigen, dass sie aber nicht mehr steigen bei gleichem Periodenindex von verschiedenen, aufeinanderfolgenden Durchgängen.

Ein solches Gleichgewicht kann aber nur dann erreicht werden, wenn der Inhalt des Speichers 37 am Ende der Periode n genau der Wassermenge entspricht, die für die Speisung der Synthesegasanlage während der ersten Periode des nächsten Durchganges notwendig ist. Dieses kann durch eine geeignete Wahl der Wasserdurchsätze an den Prozesspunkten a24 und a28 erreicht werden.

Diesen Sachverhalt gibt das nachstehende Zahlenbeispiel für einen Prozess wieder, wie er in einer Anlage mit 9 Betriebsperioden durchgeführt werden kann. Um den erwähnten Gleichgewichtszustand zu erreichen, müssen die Durchsätze a24 und a28, abweichend von der CH-PS Nr. 616602, folgendermassen gewählt werden:

a24 = 2318 kmol/h (anstatt 2385 kmol/h), und
a28 = 2452 kmol/h (anstatt 2519 kmol/h).

| Betriebs- periode | Betriebs- stunden | Inhalt des Speicherbehälters 25* (m³) | Inhalt des Speicherbehälters 37* (m³) | Deuteriumkonzentration an den Punkten | |
|---|---|---|---|---|---|
| | | | | a7 ppm D/D + H | a28 ppm D/D + H |
| I | 603 | 33 235 | 26 613 | 415 | 356 |
| II | 660 | 36 377 | 29 129 | 423 | 361 |
| III | 723 | 39 849 | 31 909 | 429 | 366 |
| IV | 791 | 43 597 | 34 910 | 434 | 370 |
| V | 865 | 47 675 | 38 176 | 438 | 373 |

| Betriebs-periode | Betriebs-stunden | Inhalt des Spei-cherbehälters 25* ($m^3$) | Inhalt des Spei-cherbehälters 37* ($m^3$) | Deuteriumkonzentration an den Punkten | |
|---|---|---|---|---|---|
| | | | | a7 ppm D/D + H | a28 ppm D/D + H |
| VI | 947 | 52 195 | 41 795 | 442 | 375 |
| VII | 1036 | 57 100 | 45 723 | 445 | 377 |
| VIII | 1134 | 62 501 | 50 049 | 447 | 379 |
| IX | 1241 | 68 399 | 54 771 | 449 | 380 |
| Total | 8000 | | | | |

* Am Ende der betreffenden Periode.

Die angenommene Ausbeute des Speisewassers in der Schwerwasseranlage ist 0,75.

Jährliche Schwerwasserproduktion
(8000 h)  25 578 kg/Jahr
Im Vergleich dazu:
europäische Anmeldung
Nr. 47357  17 034 kg/Jahr
CH-PS Nr. 616602  39 960 kg/Jahr
Fig. 1 (zwei Speicher)  38 796 kg/Jahr

a-Faktor  $3{,}74 \cdot 10^{-4} \dfrac{kg\ D_2O}{kg\ H_2O}$

Im Vergleich dazu:
europäische Anmeldung

Nr. 47357  $2{,}42 \cdot 10^{-4} \dfrac{kg\ D_2O}{kg\ H_2O}$

CH-PS Nr. 616602  $2{,}775 \cdot 10^{-4} \dfrac{kg\ D_2O}{kg\ H_2O}$

Fig. 1 (zwei Speicher)  $3{,}18 \cdot 10^{-4} \dfrac{kg\ D_2O}{kg\ H_2O}$

Die Gesamtausbeute im vorliegenden Zahlenbeispiel beträgt 23%, in der europäischen Anmeldung Nr. 47357 10%, in der CH-PS Nr. 616602 17% und im Ausführungsbeispiel gemäss Fig. 1 (zwei Speicher) 17%.

Der a-Faktor ist bei dem Ausführungsbeispiel gemäss Fig. 2 gegenüber Fig. 1 um 17,6% grösser.

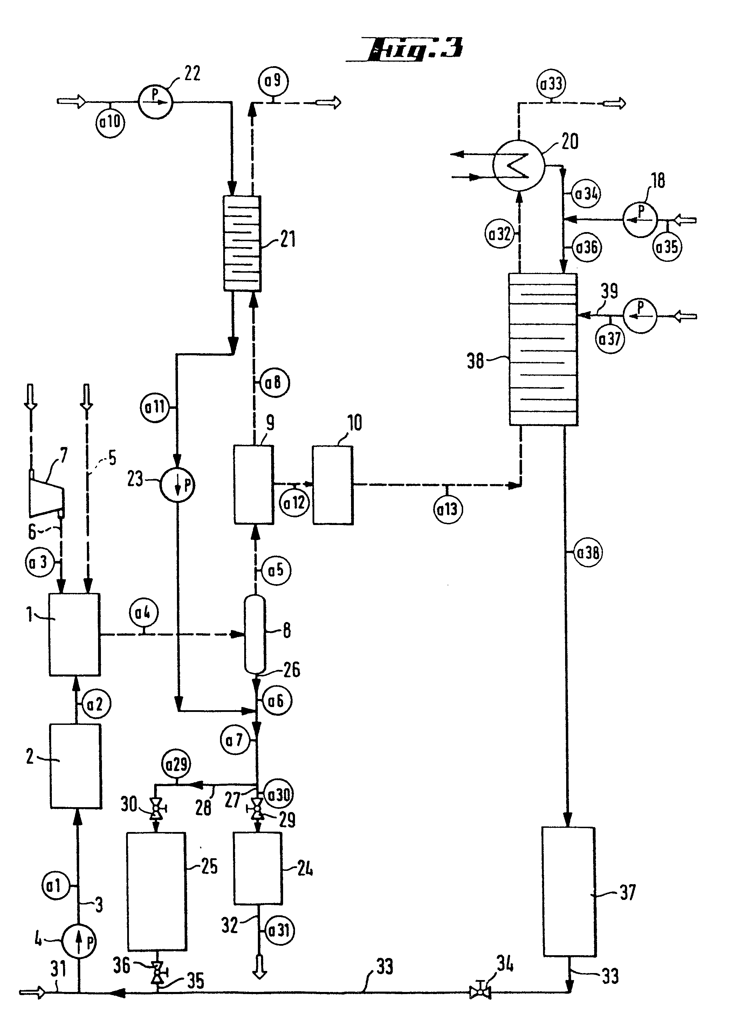

Die Fig. 3 zeigt ein Flussschema einer Anlage einer bezüglich der Deuteriumanreicherung des Zusatzwassers gegenüber den Fig. 1 und 2 abgewandelten Ausführungsform.

Die mit der Fig. 2 übereinstimmenden Anlagenelemente sind mit den gleichen Bezugsziffern bezeichnet.

Abweichend von Fig. 1 bzw. 2 wird das Gasgemisch aus dem Kondensator 8 bzw. Methanator 10 in eine Austauschkolonne 38 eingeleitet und dort im Gegenstrom zu Zusatzfrischwasser mit natürlicher Deuteriumkonzentration in Isotopenaustausch gebracht, wobei sich das Zusatzwasser an Deuterium anreichert.

In die Austauschkolonne 38 wird als Katalysator Natriumhydroxid oder Kaliumhydroxid an der Stelle 39 eingeleitet.

Der obere Teil der Kolonne dient als Waschstufe, um zu verhindern, dass von dem Gasgemisch mitgerissene Wassertropfen, die Katalysatorspuren enthalten, direkt in die Ammoniaksynthesegasanlage geführt werden.

Gegebenenfalls kann zwischen der Kolonne 38 und dem Speicher 37 noch eine im wesentlichen aus Ionenaustauschern bestehende Wasseraufbereitungsvorrichtung vorgesehen werden, worin Katalysatorspuren von dem Zusatzwasser abgetrennt werden. In diesem Fall kann der abgetrennte Katalysator wieder in die Kolonne zurückgeführt werden, indem er an der Stelle 39 eingespeist wird.

Die Betriebsweise der Gesamtanlage verläuft im übrigen wie die der Fig. 2.

Nachstehend folgt ein Zahlenbeispiel für eine Anlage gemäss der Fig. 3.

*Zahlenbeispiel*

Angabe der Durchsätze:

Für die Prozessstellen a1 bis a13 stimmen die Durchsätze mit denjenigen im vorher erwähnten Zahlenbeispiel der CH-PS Nr. 616602 überein.

a29: 3062 kmol/h $H_2O$ während der ersten
(n − 1) Perioden
0 kmol/h  während der letzten Periode
a30: 3002 kmol/h $H_2O$ während der letzten Periode
0 kmol/h  während der ersten (n − 1) Perioden
a31: 475 kmol/h $H_2O$
a32: 4069 kmol/h $H_2$
5837 kmol/h $H_2O$-Dampf
bei 200°C und 30 bar
a33: 4069 kmol/h $H_2$
7 kmol/h $H_2O$-Dampf
bei 29°C und 30 bar
a34: 5830 kmol/h $H_2O$
bei 29°C und 30 bar
a35: 1502 kmol/h $H_2O$
bei 20°C
a36: 7332 kmol/h $H_2O$
a37: 815 kmol/h $H_2O$ mit 10% NaOH gelöst
a38: 2451,924 kmol/h $H_2O$ mit 3,3% NaOH gelöst

In der Austauschkolonne 38 fliesst 8147 kmol/h $H_2O$ mit 1% NaOH gelöst.

*Zahlenbeispiel für Fig. 3 mit 9 Betriebsperioden und drei Speicherbehältern*

| Betriebs-periode | Betriebs-stunden | Inhalt des Spei-cherbehälters 25* (m³) | Inhalt des Spei-cherbehälters 37* (m³) | Deuteriumkonzentration an den Punkten | |
|---|---|---|---|---|---|
| | | | | a7 ppm D/D + H | a38 ppm D/D + H |
| I | 604 | 33 290 | 26 657 | 363 | 291 |
| II | 661 | 36 432 | 29 173 | 369 | 296 |
| III | 723 | 39 849 | 31 909 | 374 | 302 |
| IV | 791 | 43 597 | 34 910 | 379 | 306 |
| V | 866 | 47 730 | 38 220 | 384 | 311 |
| VI | 948 | 52 250 | 41 840 | 388 | 315 |
| VII | 1037 | 57 155 | 45 768 | 392 | 319 |
| VIII | 1135 | 62 557 | 50 093 | 395 | 322 |
| IX | 1235 | 68 068 | 54 506 | 398 | 325 |
| Total | 8000 | | | | |

* Am Ende der betreffenden Periode.

Die angenommene Ausbeute des Speisewassers in der Schwerwasseranlage ist 0,75.

Jährliche Schwerwasserproduktion
(8000 h)  22 728 kg/Jahr
Im Vergleich dazu:
europäische Anmeldung
Nr. 47357  17 034 kg/Jahr
CH-PS Nr. 616602  39 960 kg/Jahr
Fig. 1 (zwei Speicher)  38 796 kg/Jahr
Fig. 2 (drei Speicher)  25 578 kg/Jahr

a-Faktor  $3{,}324 \cdot 10^{-4} \frac{kg\ D_2O}{kg\ H_2O}$

Im Vergleich dazu:
europäische Anmeldung

Nr. 47357  $2{,}42 \cdot 10^{-4} \frac{kg\ D_2O}{kg\ H_2O}$

CH-PS Nr. 616602  $2{,}775 \cdot 10^{-4} \frac{kg\ D_2O}{kg\ H_2O}$

Fig. 1 (zwei Speicher)  $3{,}18 \cdot 10^{-4} \frac{kg\ D_2O}{kg\ H_2O}$

Fig. 2 (drei Speicher)  $3{,}74 \cdot 10^{-4} \frac{kg\ D_2O}{kg\ H_2O}$

Die Gesamtausbeute beträgt im vorliegenden Zahlenbeispiel 20%, in der europäischen Anmeldung Nr. 47357 10%, in der CH-PS Nr. 616602 17%, im Ausführungsbeispiel gemäss Fig. 1 (zwei Speicher) 17% und im Ausführungsbeispiel Fig. 2 (drei Speicher) 23%.

Hieraus geht hervor, dass die Ergebnisse des Verfahrens nach Fig. 3 zwar etwas ungünstiger als nach Fig. 2 sind. Jedoch ist der apparative Aufwand erheblich geringer, da nur eine Austauschkolonne anstatt zwei Behältern mit Festbettkatalysator und zwei Austauschkolonnen sowie zwei Kompressoren erforderlich ist.

**Patentansprüche**

1. Verfahren zur Herstellung von mit Deuterium angereichertem Wasser bei der Gewinnung von Wasserstoff durch katalytische und/oder thermische Spaltung in einer Synthesegasanlage, wobei der Anlage ausser Kohlenstoff oder ein oder mehrere Kohlenwasserstoffe eine Überschussmenge an Wasser bzw. Wasserdampf zugeführt wird, und das die Anlage verlassende Gemisch in die gasförmigen und flüssigen Komponenten getrennt, das dabei gewonnene, aus Abwasser bestehende, mit Deuterium angereicherte Kondensat isoliert und einer Anlage für Gewinnung von schwerem Wasser zugeführt wird, wobei die Synthesegasanlage in mindestens zwei zeitlich aufeinanderfolgenden Betriebsperioden derart betrieben wird, dass in der ersten Betriebsperiode Frischwasser im Überschuss in die Synthesegasanlage eingeleitet wird, und das aus dem gewonnenen Gemisch auskondensierte Abwasser während aufeinanderfolgender Betriebsperioden jeweils in einem ersten Behälter entsprechend seiner Deuteriumkonzentration geschichtet gespeichert und aus diesem Behälter ausser während der letzten Betriebsperiode Abwasser in die Synthesegasanlage eingeleitet wird, wobei das Abwasser jeweils in die an Deuterium reichste Schicht eingespeist und das Speisewasser jeweils aus der an Deuterium ärmsten Schicht entnommen wird, und dass das während der letzten Betriebsperiode gewonnene, auskondensierte Abwasser in einen zweiten Behälter eingeleitet wird, aus welchem es der Anlage zur Gewinnung von schwerem Wasser zugeführt wird, dadurch gekennzeichnet, dass das aus Wasserstoff, Wasserdampf und Restkomponenten bestehende Gasgemisch aus dem Kondensator in mindestens eine Austauschstufe eingeleitet wird, in welcher Wasserstoff mit Zusatzwasser mit natürlicher Deuteriumkonzentration in Isotopenaustausch gebracht wird, wobei sich das Gasgemisch an Deuterium abreichert und das Zusatzwasser sich an Deuterium anreichert, und dass dieses Wasser ebenfalls gespeichert und während (n − 1) Betriebsperioden in die Synthesegasanlage eingespeist wird.

2. Verfahren nach Anspruch 1, dadurch gekennzeichnet, dass mindestens in einer Austauschstufe Wasserstoff mit Wasserdampf in Isotopenaustausch gebracht wird, wobei sich der Wasserdampf an Deuterium anreichert, und dass sodann der Wasserstoff im Gegenstrom zu dem Zusatzwasser in Isotopenaustausch gebracht wird, wobei sich der Wasserdampf an Deuterium abreichert und das Zusatzwasser sich an Deuterium anreichert.

3. Verfahren nach Anspruch 1, dadurch gekennzeichnet, dass das Gasgemisch im Gegenstrom zu dem Zusatzwasser, in welchem Natriumhydroxid oder Kaliumhydroxid gelöst ist, in Isotopenaustausch gebracht wird, wobei sich das Gasgemisch an Deuterium abreichert und das Zusatzwasser an Deuterium anreichert.

4. Verfahren nach Anspruch 1, dadurch gekennzeichnet, dass das mit Deuterium angereicherte Zusatzwasser dem Abwasser beigemischt, in dem ersten Behälter gespeichert und daraus der Synthesegasanlage zugeführt wird.

5. Verfahren nach Anspruch 1, dadurch gekennzeichnet, dass das mit Deuterium angereicherte Zusatzwasser in einem dritten Behälter gespeichert wird, und dass während jeder der $(n - 1)$ Betriebsperioden nacheinander das Abwasser und das mit Deuterium angereicherte Wasser der Synthesegasanlage zugeführt wird.

## Claims

1. A process for the preparation of deuterium-enriched water in the production of hydrogen by catalytic and/or thermal fission in a synthesis gas plant, an excess of water or steam being fed to the plant in addition to carbon or one or more hydrocarbons, the mixture which leaves the plant being separated into the gaseous and liquid components, the resulting deuterium-enriched condensate consisting of waste water being isolated and fed to a heavy water recovery plant, the synthesis gas plant being so operated, in at least two consecutive operating periods, that an excess of fresh water is fed to the synthesis gas plant during the first period of operation and, during consecutive periods of operation, the waste water condensed out of the resulting mixture is stored in layers according to its deuterium concentration in a first tank and waste water is fed from said tank to the synthesis gas plant, except during the last period of operation, the waste water being introduced, in each case, into the layer having the richest deuterium content and the feed water being taken, in each case, from the layer having the lowest deuterium content, and the condensed-out waste water obtained during the last period of operation is introduced into a second tank from which it is fed to the heavy water recovery plant, characterised in that the gas mixture consisting of hydrogen, steam and residual components is fed from the condenser to at least one exchange stage in which hydrogen is brought into isotope exchange with additional water having a natural deuterium concentration, the gas mixture being depleted in deuterium and the additional water being enriched in deuterium, and this water is also stored and introduced into the synthesis gas plant during $(n - 1)$ operating periods.

2. A process according to Claim 1, characterised in that hydrogen is brought into isotope exchange with steam in at least one exchange stage, the steam becoming enriched in deuterium and the hydrogen then being brought into isotope exchange in counter-current to the additional water, the steam becoming depleted in deuterium and the additional water becoming enriched in deuterium.

3. A process according to Claim 1, characterised in that the gas mixture is brought into isotope exchange in counter-current to the additional water in which sodium hydroxide or potassium hydroxide is dissolved, the gas mixture becoming depleted in deuterium and the additional water becoming enriched in deuterium.

4. A process according to Claim 1, characterised in that the additional water enriched with deuterium is added to the waste water, stored in the first tank and fed from the latter to the synthesis gas plant.

5. A process according to Claim 1, characterised in that the deuterium-enriched additional water is stored in a third tank, and the waste water and the deuterium-enriched water are fed successively to the synthesis gas plant during each of the $(n - 1)$ operating periods.

## Revendications

1. Procédé pour préparer de l'eau enrichie en deutérium en obtenant de l'hydrogène par fission catalytique et/ou thermique dans une installation de gaz de synthèse à laquelle est amenée, en plus du carbone ou d'un ou plusieurs hydrocarbures, une quantité en excès d'eau ou de vapeur d'eau, le mélange quittant l'installation étant séparé en composants gazeux et liquide, le condensat obtenu, constitué par de l'eau résiduaire et enrichi par du deutérium, étant isolé et amené à une installation pour obtenir de l'eau lourde, l'installation de gaz de synthèse fonctionnant en au moins deux périodes de fonctionnement se suivant dans le temps de telle manière que, dans la première période de fonctionnement, de l'eau fraîche en excès soit introduite dans l'installation de gaz de synthèse et que l'eau résiduaire condensée du mélange obtenu soit accumulée, pendant les périodes de fonctionnement subséquentes, respectivement dans un premier récipient selon des couches en fonction de sa concentration en deutérium et que, à partir de ce récipient, de l'eau résiduaire soit introduite dans l'installation de gaz de synthèse, hormis pendant la dernière période de fonctionnement, l'eau résiduaire étant fournie respectivement à la couche la plus riche en deutérium et l'eau d'alimentation étant prélevée chaque fois de la couche la plus pauvre en deutérium, l'eau résiduaire condensée obtenue pendant la dernière période de fonctionnement étant introduite dans un second récipient à partir duquel elle est amenée à l'installation pour obtenir de l'eau lourde, procédé caractérisé en ce que le mélange de gaz constitué par de l'hydrogène, de la vapeur d'eau et des composants résiduels est introduit à partir du condenseur dans au moins un étage d'échange dans lequel de l'hydrogène, avec de l'eau additionnelle ayant une concentration naturelle en deutérium, est mis en échange d'isotopes, le mélange de gaz s'appauvrissant en deutérium et l'eau additionnelle s'enrichissant en deutérium, et en ce que cette eau est également accumulée et est fournie à l'installation de gaz de synthèse pendant (n − 1) périodes de fonctionnement.

2. Procédé selon la revendication 1, caractérisé en ce que, au moins dans un étage d'échange, de l'hydrogène est mis en échange d'isotopes avec de la vapeur d'eau, celle-ci s'enrichissant en deutérium, et en ce qu'ensuite l'hydrogène est mis en échange d'isotopes à contre-courant avec l'eau additionnelle, la vapeur d'eau s'appauvrissant en deutérium et l'eau additionnelle s'enrichissant en deutérium.

3. Procédé selon la revendication 1, caractérisé en ce que le mélange de gaz est mis en échange d'isotopes à contre-courant par rapport à l'eau additionnelle dans laquelle est dissous de l'hydroxyde de sodium ou de l'hydroxyde de potassium, le mélange de gaz s'appauvrissant en deutérium et l'eau additionnelle s'enrichissant en deutérium.

4. Procédé selon la revendication 1, caractérisé en ce que l'eau additionnelle enrichie en deutérium est mélangée à l'eau résiduaire, accumulée dans le premier récipient et, de là, est amenée à l'installation de gaz de synthèse.

5. Procédé selon la revendication 1, caractérisé en ce que l'eau additionnelle enrichie en deutérium est accumulée dans un troisième récipient et en ce que, pendant chacune des (n − 1) périodes de fonctionnement, on amène l'une après l'autre l'eau résiduaire et l'eau enrichie en deutérium à l'installation de gaz de synthèse.

*Fig.1*

Fig. 2

Fig.3